# EUROPEAN PATENT APPLICATION

(11) **EP 1 655 356 A1**
(43) Date of publication of application: **10.05.2006**
(21) Application number: 05256893.8
(22) Date of filing: 07.11.2005
(51) Int. Cl.: C09J 133/02, C09J 133/06

(54) **Water-based adhesives for difficult substrates and low temperatures**

(30) Priority: 09.11.2004 US 626118 P
(71) Applicant: ROHM AND HAAS COMPANY, Philadelphia, Pennsylvania 19106-2399 (US)
(72) Inventor: Bunn, Andrew Graham, Bryn Mawr, Pennsylvania 19010 (US); Griffith, William Bryan, North Wales, Pennsylvania 19454 (US); Schultz, Alfred Karl, Maple Glen, Pennsylvania 19002 (US)
(74) Representative: Kent, Venetia Katherine

(57) **Abstract**

Adhesive compositions comprising one or more polymerizable surfactant monomers as part of an emulsion polymer bond well to a wide spectrum of substrates that conventional adhesive have difficulty adhering to and have improved low temperature and high temperature performance as compared to conventional PSAs.

## Description

This invention relates to improved water-based or aqueous adhesives, including pressure sensitive adhesives (PSAs). In particular, this invention relates to aqueous adhesives including one or more polymerizable surfactants. The adhesive compositions bond well to a wide spectrum of substrates (high energy or polar, to low energy or non-polar), especially low energy substrates that conventional adhesives have difficulty adhering to, and have improved low temperature and high temperature performance when applied to such substrates as compared to conventional water-based PSAs.

Conventional water-based PSAs prepared from acrylic based emulsion polymers in general do not exhibit good adhesion to surfaces of low energy or non-polar substrates including, but not limited to, for example, polyolefins, thermoplastic polymers, recycled paper/board and corrugated cardboard (substrates collectively referred to as "difficult substrates"). In addition, conventional water-based PSAs prepared from acrylic based emulsion polymers in general do not have good adhesion at low temperatures, particularly below 15° C.

U.S. Patent No. 5,164,444 describes water-based PSAs prepared from conventional acrylic monomers and a positive amount of a chelating monomer having a pendant chain such that the emulsion polymer prepared is formed in the presence of a small amount (0.4 wt. % or less) of a vinyl functional monomer which aids in copolymerizing the emulsion monomer mixture, although the emulsion adhesive polymers can also be prepared by using only conventional surfactants. In contrast, the present invention uses specifically designed acrylic emulsion polymers used in high performance PSAs in combination with one or more specifically designed polymerizable surfactants in an amount greater than 0.4 weight percent during the polymerization process to prepare universal water-based adhesives, including but not limited to PSAs, having improved low temperature and high temperature performance and good adhesion to a wide variety of high energy to low energy substrates, including non-polar substrates and other difficult to adhere to substrates.

Accordingly, the present invention is to provide one or more aqueous adhesive compositions that adhere to low energy and high energy substrates comprising: one or more polymerizable surfactant monomers in an amount from 0.40% to 100% by weight, based on the total weight of the one or more aqueous adhesive compositions, the one or more aqueous adhesive compositions having at least one of the following properties improved relative to that of a corresponding aqueous adhesive composition absent the one or more polymerizable surfactant monomers, selected from one or more of the following: improved mechanical stability, improved drying profile, improved rheology for coating, improved adhesion over a broad range of high and low temperatures, including temperatures less than 15° C, improved anchorage to a substrate or a composite substrate at temperatures less than 15° C, improved adhesion to low energy or non-polar substrates, improved adhesion to recycled materials (e.g. recycled paper and cardboard), improved rheology at temperatures less than 15° C, improved water resistance; improved film integrity (i.e., green strength) at temperatures less than 15° C; improved specific adhesion, enhanced peel-build characteristics, improved humidity resistance, improved water whitening resistance, and improved plasticizer migration resistance, improved solvent resistance, improved additive migration resistance, gas-barrier properties, improved rheology for low temperature processing, improved drying/curing characteristics, low noise unwind and reduced edge ooze and flow to impart improved converting, cutting and stripping to the adhesive article.

The invention also provides an aqueous adhesive composition that adheres to low energy and high energy substrates comprising: an aqueous acrylic emulsion polymer further comprising, as copolymerized units, from 0.25% to 99.75% by weight, based on dry polymer weight, of monoethylenically unsaturated nonionic (meth)acrylic monomer, from 0.40% to 99.75% by weight, based on dry polymer weight of one or more ethylenically unsaturated surfactant monomers and from 0.25% to 10% by weight, based on dry polymer weight, of monoethylenically unsaturated acid monomer, said polymer having a Tg of - 100 °C to 40 °C, wherein the adhesive composition adheres to low energy and high energy substrates.

The invention also provides an aqueous adhesive composition comprising: an aqueous acrylic emulsion polymer further comprising, as copolymerized units, from 0.25% to 99.75% by weight, based on dry polymer weight, of monoethylenically unsaturated nonionic (meth)acrylic monomer, from 0.40% to 99.75% by weight, based on dry polymer weight of one or more ethylenically unsaturated surfactant monomers and from 0.25% to 10% by weight, based on dry polymer weight, of monoethylenically unsaturated acid monomer, said polymer having a Tg of - 100 °C to 40 °C, wherein the adhesive composition adheres to low energy and high energy substrates over a broad high to low temperature range, including temperatures less than 15° C, including at temperatures less than 100° C and at temperatures less than 60° C.

The invention also provides an aqueous adhesive composition that adhere to low energy and high energy substrates further comprising a blend of two or more aqueous emulsion polymers, including blends with aqueous polymer dispersions.

The invention also provides an aqueous pressure sensitive adhesive composition comprising: an aqueous acrylic emulsion polymer further comprising, as copolymerized units, from 0.25% to 99.75% by weight, based on dry polymer weight, of monoethylenically unsaturated nonionic (meth)acrylic monomer, from 0.40% to 99.75% by weight, based on dry polymer weight of one or more ethylenically unsaturated surfactant monomers and from 0.25% to 10% by weight, based on dry polymer weight, of monoethylenically unsaturated acid monomer, said polymer having a Tg of - 100 °C to 40 °C, wherein the pressure sensitive adhesive composition adheres to low energy and high energy substrates over a broad high to low temperature range, including temperatures less than 15° C.

The invention also provides a tackified aqueous pressure sensitive adhesive composition further comprising one or more tackifiers.

The invention also provides a pressure sensitive adhesive tape that adheres to low energy and high energy substrates over a broad high to low temperature range, including temperatures less than 15° C and having good adhesion when applied to one or more difficult to adhere to substrates.

The invention also provides a carton sealing tape having high burst resistance and having utility to close all types of cardboard boxes, including more challenging boxes made with recycled cardboard, or those with very high bursting strength (such as stiff double-walled or multi-walled boxes), even at lower temperatures (less than 15° C).

As used herein, the term "ethylenically unsaturated surfactant monomers" refers to monomers that when added to water reduces the surface tension of water to less than 72 dynes/cm. The ethylenically unsaturated groups of ethylenically unsaturated monomers used in the present invention are polymerized under conditions of emulsion polymerization described herein and are incorporated in aqueous emulsion polymers formed and then subsequently used to prepare adhesives of the invention. The adhesive composition prepared using the one or more ethylenically unsaturated surfactant monomers provide adhesives that will adhere to both low energy and high energy substrates and can be considered universal adhesives.

The aqueous adhesive compositions of the present invention includes an aqueous dispersion of polymeric particles having a mean diameter in the range of from 20 to 800 nm, the particles including, as polymerized units, at least one multiethylenically or ethylenically unsaturated monomer, at least one ethylenically unsaturated surfactant monomer and at least one ethylenically unsaturated water soluble monomer. As used herein, the term "dispersion" refers to a physical state of matter that includes at least two distinct phases wherein a first phase is distributed in a second phase, the second phase being a continuous medium. By "aqueous" herein is meant the continuous medium that is from 50 to 100 wt.% water, based on the weight of the aqueous medium.

According to one embodiment of this invention, the universal aqueous adhesive composition includes at least one aqueous emulsion polymer prepared from one or more ethylenically unsaturated monomers, including but not limited to acrylic emulsion polymers. The aqueous acrylic emulsion polymer contains, as copolymerized units, from 0.40 % to 99. 75% by weight, including from 0.40 % to 99.35% by weight, based on dry polymer weight, of monoethylenically-unsaturated non-ionic (meth)acrylic monomers including esters, amides, and nitriles of (meth)acrylic acid, such as, for example, (meth)acrylic ester monomers including methyl acrylate, ethyl acrylate, butyl acrylate, 2-ethylhexyl acrylate (EHA), iso-octyl acrylate, decyl acrylate, lauryl acrylate, stearyl acrylate, hydroxy ethyl acrylate (HEA), methyl methacrylate, butyl methacrylate, hydroxyethyl methacrylate, hydroxypropyl methacrylate; urieido (meth)acrylate; (meth)acrylonitrile and(meth)acrylamide. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively. By "non-ionic monomer" herein is meant that the copolymerized monomer residue does not bear an ionic charge between pH=1·14.

A wide variety of monomers or mixture of monomers may be used to make the emulsion polymer used in the adhesives of this invention. Other suitable acrylic ester monomers, include but are not limited to for example, propyl acrylate, isopropyl acrylate, isobutyl acrylate, secondary butyl acrylate, t-butyl acrylate, pentyl acrylate, neopentyl acrylate, hexyl acrylate, heptyl acrylate, octyl acrylate, isodecyl acrylate, bornyl acrylate, isobornyl acrylate, myristyl acrylate, pentadecyl acrylate and the like; likewise other methacrylic acid ester monomers, including but not limited to, ethyl methacrylate, propyl methacrylate, isopropyl methacrylate, isobutyl methacrylate, hexyl methacrylate, octyl methacrylate, isooctyl methacrylate, decyl methacrylate, isodecyl methacrylate, lauryl methacrylate, bornyl methacrylate, isobornyl methacrylate, myristyl methacrylate, pentadecyl methacrylate, stearyl methacrylate, phosphoethyl methacrylate and the like; maleate esters and the like may be used.

According to a separate embodiment other suitable aqueous polymer dispersions that are used in accordance with the invention, either by emulsion polymerization or by blending include, but are not limited to, dispersions of polyurethanes, polyesters, natural rubber, synthetic rubbers, including styrenebutadiene and related copolymers, polyvinyl ether, polyvinyl chloride and copolymers thereof.

The aqueous emulsion polymer also includes, as copolymerized units, from 0.40% to 99.75% by weight, including from 0.50% to 50% by weight, from 0.50% to 10% by weight and from 0.50% to 5% by weight, based on polymer weight, of one or more ethylenically unsaturated surfactant monomers. The ethylenically unsaturated surfactant monomers are surface active agents and are especially useful in emulsion polymerization reactions and are generally capable of copolymerizing with other ethylenically unsaturated monomers which are conventionally employed in emulsion polymerization reactions, and are capable of polymerizing with themselves, or co-polymerization with a partially polymerized polymer.

Suitable ethylenically unsaturated surfactant monomers include, but are not limited to, for example, salts or quaternary nitrogen compounds comprising at least one acid, wherein the acid is a sulfonic acid, a carboxylic acid, or a phosphoric acid, or a mixture thereof, and at least one nitrogenous base, wherein the nitrogenous base contains at least one nitrogen atom and at least one ethylenically unsaturated moiety. Other suitable examples are described in U. S. Pat. Publ. No. 2003/0149119.

Other suitable polymerizable surfactant monomers include nonylphenoxy propenyl polyethoxylated sulphate (for example as Hitenol™ from Daiichi Corp); sodium alkyl allyl sulphosuccinate (for example as Trem™ LF-40 from Henkel Corp); ammonium di-(tricyclo(5.2.1.0 2, 6) dec-3-en-(8 or 9)oxyethyl) sulfosuccinate; and ammonium di-(tricyclo(5. 2.1.0 2,6) dec-3-en-(8 or 9) sulfosuccinate. Additionally, the ammonium and metal salts of unsaturated C₆ to C₃₀ organic acids can be used, alone or in combination with the above surfactants. Examples of these acids are: alpha methyl cinnamic acid, alpha phenyl cinnamic acid, oleic acid, lineolic acid (as described in U.S. Pat. No.5,362,832), rincinoleic acid, the unsaturated fraction of Tall oil rosin and fatty acids, disproportionated rosin acid, soybean oil fatty acids, olive oil fatty acids, sunflower oil fatty acids, linseed oil fatty acids, safflower oil fatty acids, sorbitan mono-oleate, abietic acid, poly(oxyethylene) sorbitol sesquioleate, and Empol™ 1010 Dimer Acid. Additional suitable polymerizable surfactant monomers also include, for example, maleate derivatives (as described in U. S. Pat. No. 4,246,387), and allyl derivatives of alkyl phenol ethoxylates (as described in Japa. Pat. No. 62-227435). The amount of surfactant used is typically from 0.40% to 10% by weight, including from 0.50% to 6% by weight, based on the total weight of monomer.

According to a separate embodiment, an aqueous adhesive is prepared from one or more polymerizable surfactant monomers in an amount from 0.40% to 100% by weight. One example is a homopolymer or copolymer prepared from one or more polymerizable surfactant monomers.

The aqueous emulsion polymer also contains, as copolymerized units, from 0.25% to 10% by weight, based on dry polymer weight, monoethylenically-unsaturated acid monomer such as, for example, acrylic acid, methacrylic acid, crotonic acid, itaconic acid, sulfoethyl methacrylate, phosphoethyl methacrylate (PEM), fumaric acid, maleic acid, monomethyl itaconate, monomethyl fumarate, monobutyl fumarate, and maleic anhydride. Preferably, the emulsion polymer contains, as copolymerized units, from 0.3% to 2.5% by weight, based on dry polymer weight, (meth) acrylic acid.

The aqueous emulsion polymer further contains, as copolymerized units, from 0 to 49.75% by weight, based on dry polymer weight, of optional monomers which are neither non-ionic monoethylenically unsaturated (meth)acrylic monomers nor monoethylenically unsaturated acid monomers. Optional monomers include, for example, styrene or alkyl-substituted styrenes; butadiene; aminoalkyl (meth)acrylate, N-alkyl aminoalkyl (meth)acrylate, N,N-dialkyl aminoalkyl (meth)acrylate; dioctyl maleate, dibutyl maleate, and other suitable maleates; itaconates; vinyl acetate, vinyl propionate, or other vinyl esters; vinyl monomers such as vinyl chloride, vinylidene chloride, and N-vinyl pyrollidone; allyl methacrylate, vinyl toluene, vinyl benzophenone, diallyl phthalate, 1,3-butylene glycol dimethacrylate, 1,6- hexanedioldiacrylate, and divinyl benzene.

The emulsion polymer used in this invention is substantially uncrosslinked, when it is applied to a substrate in the method of this invention, although low levels of deliberate or adventitious cross-linking can be present. When low levels of cross-linking or gel content are desired, low levels of optional non.ionic multiethylenically unsaturated monomers such as, for example, 0% - 5% by weight, including 0.05 to 1% by weight, based on the dry polymer weight, can be used. The terminology "multiethylenically unsaturated" means having two or more sites of ethylenic unsaturation per molecule. Suitable multiethylenically unsaturated monomers include, for example, allyl (meth)acrylate, diallyl phthalate, 1,4-butylene glycol di(meth)acrylate, trimethylolpropane tri(meth)acrylate, divinyl ketone, N,N'-methylenediacrylimide, the polyallyl and polyvinyl ethers of pentaerythritol and mixtures thereof. Other conventional methods of cross-linking known in the art can also be used. It is important, however, that the quality of the film formation is not materially impaired.

The acrylic polymer can be made by various addition polymerization techniques for polymerizing ethylenically unsaturated monomers. Preferably, the polymer is made by a free-radical initiated aqueous emulsion polymerization. Such techniques are well known in the art.

Typically, the initiator and the monomers to be polymerized in the emulsion polymerization are added to an aqueous medium at controlled rates and the polymerization is carried out in the presence of a stabilizer. However, the use of polymerizable surfactant monomers may render the addition of stabilizers unnecessary.

In the preparation of the aqueous acrylic emulsion polymer a thermal initiation process is used. The thermal initiator provides free radicals at a useful rate at the reaction temperature. The reaction temperature is maintained at a temperature from 70 °C to 99 °C throughout the course of the reaction. Preferred is a reaction temperature between 75 °C and 95 °C, more preferably between 80 °C and 90 °C. The reaction temperature can be held at a constant temperature or varied throughout part or all of the reaction as desired. The reaction is typically carried out a pH of from 2 to 8. The monomer mixture can be added neat or as an emulsion in water. The monomer mixture can be added in one or more additions or continuously, linearly or not, over the reaction period, or combinations thereof. Useful initiators include, for example, sodium persulfate, potassium persulfate, ammonium persulfate, sodium perborate, and ammonium or alkali metal peroxydisulfate salts. Preferred are persulfate salts. The thermal initiation can be augmented by a minor amount of a redox initiated reaction which is effected when the thermal initiator, also known in the art as an oxidant, is contacted with a reductant. Suitable reductants include, for example, sodium sulfoxylate formaldehyde, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, ascorbic acid, isoascorbic acid, lactic acid, glyceric acid, malic acid, 2-hydroxy-2-sulfinatoacetic acid, tartaric acid and salts of the preceding acids. Redox reaction catalyzing metal salts of iron, copper, manganese, silver, platinum, vanadium, nickel, chromium, palladium, or cobalt can optionally be used. In any event the reaction includes less than 0.5 moles, preferably less than 0.2 moles, more preferably less than 0.1 mole, and most preferably no moles of reductant per mole of thermal initiator. The thermal initiator is used in the amount of from 0.05% to 4.0%, by weight, based on dry polymer weight. According to one embodiment, the thermal initiator is used in the amount of from 0.05% to 0.3%, by weight, based on dry polymer weight.

Other suitable free radical initiators include known peroxides, hydroperoxides, persulfates and azo initiators such as, for example, hydrogen peroxide, benzoyl peroxide, tert-butyl hydroperoxide, tert-amyl hydroperoxide, cumene peroxide, tert-butyl perbenzoate, tert-butyl diperphthalate and methyl ethyl ketone peroxide, azodiisobutyronitrile and mixtures thereof. The initiators can be used alone, i.e., in a thermal initiation system, or, optionally, in combination with a reducing agent, i.e., in a redox initiation system. The initiator is preferably used at a level of from about 0.01 pbw to 3 pbw per 100 pbw total monomer charge. As used herein, the term "pbw" refers to parts by weight. As used herein, the terminology "total monomer charge" means all monomers added to the aqueous medium during the course of the polymerization process.

According to one embodiment, no additional conventional surfactants are required due to the incorporation of one or more ethylenically unsaturated surfactant monomers. According to a separate embodiment, conventional emulsion polymerization surfactants can be used in combination with the one or more ethylenically unsaturated surfactant monomers.

If used, conventional surfactants include, but are not limited to, for example, from about 0.05 pbw to about 5 pbw per 100 pbw total monomer charge of an anionic surfactant or from about 0.1 pbw to about 10 pbw of a nonionic surfactant per 100 pbw total monomer charge. Suitable anionic surfactants include, for example, alkyl sulfates, alkyl phenol ethoxysulfates, alkyl sulfonates, alkaryl sulfonates and alkyl sulfosuccinates, such as, for example, sodium lauryl sulfate, nonyl phenol ethoxy(4)sulfate, sodium dodecyl benzene sulfonate, disodium dioctyl sulfosuccinate, as well as mixtures thereof. Suitable nonionic surfactants include, for example, ethoxylated alkyl phenols, poly(ethylene oxide/propylene oxide) block copolymers, such as, for example, ethoxylated (10-60 moles ethylene oxide) nonyl phenol, as well as mixtures thereof.

A chain transfer agent may be usefully employed in accordance with the invention. The weight average molecular weight (Mw) of the emulsion polymer may be adjusted through the addition of a chain transfer agent, such as n-dodecyl mercaptan, during emulsion polymerization to give a suitable balance of adhesive and cohesive strength. Suitable chain transfer agents include, but are not limited to for example, isopropanol, halogenated compounds, n-butyl mercaptan, n-amyl mercaptan, n-dodecyl mercaptan, t-dodecyl mercaptan, alkyl thioglycolate, mercaptopropionic acid, and alkyl mercaptoalkanoate. According to one embodiment of the invention, chain transfer agent is not required but in some embodiments it is used in an amount of from 0.001 to 0.5, including from 0:0025 to 0.1, moles per kg dry polymer weight. Linear or branched C₄-C₂₂ alkyl mercaptans such as n-dodecyl mercaptan and t-dodecyl mercaptan are preferred. Chain transfer agent(s) can be added in one or more additions or continuously, linearly or not, over most or all of the entire reaction period or during limited portion(s) of the reaction period such as, for example, in the kettle charge and in the reduction of residual monomer stage.

In the preparation of the aqueous acrylic emulsion polymer a neutralizer is included. By "neutralizer" herein is meant is a basic material which is capable of entering into an acid-base reaction with the acid monomer. Suitable neutralizers include, for example, ammonia, amines, sodium hydroxide, potassium carbonate, and sodium bicarbonate. The neutralizer is used in the amount of from 5% to 75%, preferably from 5% to 50%, on an equivalents basis, based on the equivalents of monoethylenically unsaturated acid monomer.

The aqueous acrylic emulsion polymer has an average particle diameter of from 1 to 1000 nanometers, including from 20 to 800 nm and from 70 to 400 nanometers. Particle sizes herein are those determined using a Brookhaven Model BI-90 particle sizer manufactured by Brookhaven Instruments Corporation, Holtsville NY, reported as "effective diameter". Also contemplated are multimodal particle size emulsion polymers wherein two or more distinct particle sizes or very broad distributions are provided as is taught in U.S. Patent Nos. 5,340,858; 5,350,787; 5,352,720; 4,539,361; and 4,456,726.

The glass transition temperature ("Tg") of the aqueous acrylic emulsion polymer depends on the type of adhesive desired and is typically from -100 °C to 40 °C, including from -80 °C to -10 °C for PSAs, including from -60 °C to +40 °C and from -60 °C to -10 °C. The monomers and amounts of the monomers selected to achieve both the desired polymer Tg range for preparing a specific type of adhesive are well known in the art.

The adhesive composition can contain conventional adhesive adjuvants such as, for example, tackifiers, emulsifiers and wetting agents, cross-linkers, monomers, oligomers, polymers, solvents or plasticizers, buffers, neutralizers, thickeners or rheology modifiers, biocides, antifoaming or defoaming agents. They may, optionally, further include other additives known in the art such as, for example, pigments, fillers, curing agents, adhesion promoters, colorants, waxes and antioxidants and other conventional additives.

The solids content of the aqueous adhesive compositions of the present invention can be from about 10% to about 80% by weight. The viscosity is typically from 0.05 to 5 Pa/s (50 cps to 5000 cps), as measured using a Brookfield viscometer; the viscosities appropriate for different end uses and application methods vary considerably. The adhesive is applied by conventional adhesive application methods such as, for example, curtain coating, roller coating, reverse roller coating, meyer rod, slot die and gravure coating.

The adhesive compositions are applied to one or more low energy or high energy backing materials. Low energy backings include but are not limited to for example, polyolefins, plastics including sheets and polymer films of substituted ethylene or propylene monomers, polypropylene, polyethylene, polyamide, polyamide imide, polyester, or composite blends, perfluorinated polymers excluding Teflon™ which is useful as a release liner for the PSAs of the invention, vinyl polymers, glossy paper and products having a low energy surface coating. High energy backing materials include but are not limited to glasses, metallized films, paper, rough surface polymer films, cardboard, acetates, cellulose acetates, woven and non-woven textiles. These are applied with or without a prior substrate treatment such as a chemical primer, treated release liners, or corona or flame treated surfaces. This property may be used advantageously to provide a suitable adhesive layer in an adhesive article, or to provide a release layer, for example in an adhesive tape article.

The adhesive coating on the backing material or substrate is typically dried, or allowed to dry, at temperatures from 40°C to 200°C. The PSAs of the invention are successfully prepared as tapes and wound on release coating materials that include but are not limited to Teflon and silicones. A chemical primer can be used in accordance with the invention which may be a pre-coat of the adhesive composition with or without additives, or may comprise an alternate primer composition, including one or more organic solvents.

In one embodiment of the present invention, an aqueous adhesive including one or more polymerizable, ethylenically unsaturated surface active monomers and bearing a functional species, such as for example, an adhesion promoter or a release agent, or additional cross-linkable moiety, is provided. For example, the functional species can be provided by a corresponding functional monomer introduced in the preparation of the adhesive, by post reaction of additional amounts of polymerizable, ethylenically unsaturated surface active monomers, or by physical attachment such as adsorption, hydrogen bonding, etc. of an appropriate species to the polymerizable, ethylenically unsaturated surface active monomers. The polymerizable, ethylenically unsaturated surface active monomers can also provide a more efficient use of the functional species relative to the adhesive wherein the functional species are attached to particles less than 50 nm.

In one embodiment, the adhesives have useful specific adhesion, meaning improved adhesion to particular difficult to bond substrates. Difficult to adhere to substrates include but are not limited to recycled paper, recycled cardboard, composite wood board, and corrugated forms thereof, including corrugated cardboard and paper. Selection of polymerizable, ethylenically unsaturated surface active monomers with suitable polar functional groups can be used to promote adhesion to various difficult to bind substrates, such as corrugated paper and recycled paper, or high energy substrates, such as metallized films. Hydroxyl (for example, HEMA type) and acid containing monomers and PEM are examples of such polar monomers. Likewise, selection of polymerizable, ethylenically unsaturated surface active monomers with suitable non-polar functional groups can be used to promote adhesion to substrates such as low energy substrates like high and low density polyethylene, untreated oriented polypropylene (OPP) and printed olefins.

Silicone and Teflon™ are useful as release coatings in accordance with the invention.

Aqueous adhesive compositions with desirable gas or moisture barrier properties can be prepared using polymerizable, ethylenically unsaturated surface active monomers and suitable monomers including, but not limited to for example, vinyl chloride, vinylidene chloride, vinyl alcohol, acrylonitrile and other monomers known to provide barrier functionality when incorporated in suitable polymers.

Compounds that absorb or retain moisture and that are non-volatile and compatible with the acrylic polymer under the conditions of anticipated use are useful as the humectant of the adhesive composition of the present invention. Suitable humectants include but are not limited to, for example, protein based humectants such as urea and urea derivatives, polyols, including poly(oxyalkylene) glycols, ethoxylated polyols and propoxylated polyols, sugars, including ethoxylated sugars and propoxylated sugars, 1,3-butane diol, 1,2,6-hexanetriol, trimethylol propane, pentaerythritol, glycerol, polyethylene glycols having a molecular weight of from about 100 to about 4000, such as, for example, diethylene glycol and triethylene glycol, poly(ethylene oxide/propylene oxide) copolymers, sorbitol, glucose, sucrose, corn syrup, ethoxylated (10-40 moles ethylene oxide) glycerol, ethoxylated (10-40 moles ethylene oxide) glucose, propoxylated (10-40 moles propylene oxide) glucose, hydrolyzed soy protein, soluble collagen and mixtures thereof.

According to one embodiment, the adhesive composition of the present invention is made by combining the polymer and the humectant in an aqueous medium, wherein the aqueous polymer emulsion includes from about 40 wt % to about 80 wt % polymer solids. The polymer particles have an average particle size of from about 80 nanometers (nm) to about 1000 nm. The pH of the aqueous polymer emulsion is adjusted to a pH of 7-9.5 by adding an effective amount of a base such as, for example, sodium hydroxide or aqueous ammonia, to the emulsion prior to addition of the humectant.

An adhesive article is made by applying a coating of the adhesive composition of the present invention to a primary backing material and allowing the coating to dry, thereby providing an adhesive layer consisting of the solids portion of the adhesive composition covering a portion of the surface of the backing material.

The coating of adhesive emulsion is applied to at least a portion of at least one surface of the primary backing material by any convenient method such as, for example, roll coating, wire-wound rod coating, knife coating or curtain coating, and allowed to dry to form a dry adhesive layer on the coated portion of the surface of substrate. The adhesive emulsion may be applied as a continuous coating or a discontinuous coating.

According to one embodiment, the adhesive emulsion is applied to a surface of the primary backing material in an amount effective to provide a dry adhesive layer 5 grams per square meter (g/m²) to 100 g/m² on the coated portion of the surface of the primary backing material. The primary backing material is a sheet-like material such as, for example, a sheet of paper, a polymer film, a textile fabric or a nonwoven fiber sheet, and the adhesive article of the present invention is correspondingly a sheet-like material such as, for example, a pressure sensitive adhesive tape, a pressure sensitive adhesive label or a pressure sensitive adhesive film.

In a separate embodiment, the adhesive article is an adhesive tape having an adhesive coated surface and an opposite non-coated surface.

In a separate embodiment, the article includes a release layer, e.g., a polymer film, for temporarily covering the adhesive layer prior to use.

In an alternative preferred embodiment, wherein an adhesive tape is provided in the form of a concentrically wound roll, the non-coated surface of the underlying layer of tape functions as a release layer for the adhesive layer.

The adhesive composition may be applied to more than one surface of the primary substrate, for example, both sides of a strip of a polymer film may be coated to make a "double-sided" adhesive tape.

The adhesive article of the present invention is used by removing the release layer, if present, from the article and then applying an adhesive coated surface of the adhesive article to one or more secondary substrates or to one or more portions of a single secondary substrate to form a composite article wherein the substrates or primary backing material and secondary substrate portions are bonded together by an interposed dry adhesive layer.

Suitable secondary substrates include high energy to low energy substrates, including sheet-like materials such as, for example, paper products such as papers and paperboards, cardboards, corrugated cardboards, wood, metal films, polymer films and composite substrates. The terminology "composite substrates" as used herein means substrates consisting of a combination of dissimilar substrate materials such as polymer-coated paperboards or cardboards such as, for example, wax-coated cardboard, and bonded wood products such as, for example, particle boards.

The adhesive layer of the adhesive article is exposed to ambient humidity during the time period between removal of a release layer and application of the adhesive article to the secondary substrate. The performance of the adhesive article of the present invention is relatively insensitive to the relative humidity of the environment in which the adhesive article is used.

The following examples are presented to illustrate further various aspects of the present invention. Polymer samples as described in U.S. Pat. No. 5,679,732, were prepared using reactive surfactant monomers and were compared to polymer samples made with traditional surfactants (see Table 1).

Adhesives were coated onto oriented polypropylene (OPP) film on a pilot coater using a Meyer bar to control coat weights to be 12.5 - 13.0 lb/ream (~21 - 22 g/m²) in order to produce tapes to be evaluated as carton sealing tapes. It was discovered that maximum line speeds that can produce dry adhesive can be run at least 10-15% faster for adhesives of the present invention as compared to identical compositions with conventional surfactants. Different box types were evaluated, with the more difficult box types being a rough recycled cardboard box (North Atlantic Packaging, Scarborough, Ontario; higher bursting strength, 95 lb gross weight limit), and a stiff double walled box (Thomas G. Goldkamp, Inc., Ambler, PA, USA; high bursting strength, 90 lb gross weight limit). Two people were required for the testing procedure, one holding the box and one applying the tape using a 4 lb roller in order to give a uniform application of pressure to the tape for each box tested. The tape was cut such that the overhang on each side of the box was equal and was the same for all boxes tested. For each adhesive tape being tested for a given box type and under a given set of conditions (temperature and humidity), there were 5 boxes closed, so a possible 20 overhanging tape flaps that could fail. Tape and boxes were aged at specific use conditions, including temperatures and humidity, in the constant environment room before application. The box closing was performed under the test conditions specified in Table 1, and the boxes remained in the constant environment room for the duration of the testing.

The samples made with reactive surfactants outperformed the others at both colder temperatures and high temperatures. The results are summarized in Table 1 below.

**Table 1. Adhesives made with and without ethylenically unsaturated surfactant monomers.**

| Sample | Surfactant | *Test Procedure | # % Box Pops |
|---|---|---|---|
| Comparative 1 | 0.25% Alkyl benzene sulfonate | 40 F; 21% RH; RRB | 100 % (24 hr) |
| Comparative 2 | 1.0% Alkyl benzene sulfonate | 40 F; 21% RH; RRB | 20 % (24 hr) |
| A | 1.0% POLYSTEP NMS-1 | 40 F; 21% RH; RRB | 0 % (24 hr) |
| B | 0.5% POLYSTEP NMS-1 | 40 F; 21% RH; RRB | 0 % (24 hr) |
| C | 0.25% POLYSTEP NMS-1 | 40 F; 21% RH; RRB | 100 % (24 hr) |
| | | | |
| Comparative 1 | 0.25% Alkyl benzene sulfonate | 40 F; 21% RH; DWB | 100 % (24 hr) |
| B | 0.5% POLYSTEP NMS-1 | 40 F; 21% RH; DWB | 40 % (24 hr) |
| Comparative 1 | 0.25% Alkyl benzene sulfonate | 105 F; 50% RH; RRB | 45 % (4 hr) |
| Comparative 2 | 1.0% Alkyl benzene sulfonate | 105 F; 50% RH; RRB | 100 % (4 hr) |
| A | 1.0% POLYSTEP NMS-1 | 105 F; 50% RH; RRB | 80 % (4 hr) |
| B | 0.5% POLYSTEP NMS-1 | 105 F; 50% RH; RRB | 5 % (4 hr) |
| ** RRB = rough recycled boxes; DWB = double-wall boxes* | | | |
| *#Percentage ofadhesives failures per unit time* | | | |

Tapes made from traditional acrylate emulsion pressure sensitive adhesives lack cold temperature performance on difficult substrate surfaces, and perform adequately at elevated temperatures. It was discovered that using commercial surfactant monomers to make aqueous acrylate emulsion PSA's, in place of their traditional counterparts, unexpectedly improves the box closing properties at both low temperatures and high temperatures.

## Claims

1. A universal aqueous adhesive composition comprising: an aqueous acrylic emulsion polymer further comprising, as copolymerized units, 0.25% to 99.75% by weight, based on dry polymer weight, of monoethylenically unsaturated nonionic (meth)acrylic monomer, from 0.40% to 99.75% by weight, based on dry polymer weight of one or more ethylenically unsaturated surfactant monomers and from 0.25% to 10% by weight, based on dry polymer weight, of monoethylenically unsaturated acid monomer, said polymer having a Tg of - 100 °C to 40 °C, wherein the adhesive composition adheres to low energy and high energy substrates.

2. The universal adhesive of claim 1 wherein the adhesive composition is prepared from a polymer having a Tg of - 100 °C to 0 °C.

3. A universal aqueous adhesive compositions comprising: one or more polymerizable surfactant monomers in an amount from 0.40% to 100% by weight, based on the total weight of the one or more aqueous adhesive compositions, the aqueous adhesive composition having at least one of the following properties improved relative to that of a corresponding aqueous adhesive composition absent the one or more polymerizable surfactant monomers, selected from one or more of the following: improved mechanical stability, improved drying profile, improved rheology for coating, improved adhesion over a range of high and low temperatures, including temperatures less than 15° C, improved anchorage to a substrate or a composite substrate at temperatures less than 15° C, improved adhesion to low energy or non-polar substrates, improved adhesion to recycled materials, improved rheology at temperatures less than 15° C, improved water resistance, improved humidity resistance; improved film integrity (i.e., green strength) at temperatures less than 15° C; improved specific adhesion, enhanced peel-build characteristics, improved water whitening resistance, and improved plasticizer migration resistance, improved solvent resistance, improved additive migration resistance, low noise unwind of films, gas-barrier properties, improved rheology for low temperature processing, and reduced edge ooze and flow to impart improved converting, cutting and stripping to an adhesive article.

4. An aqueous pressure sensitive adhesive composition comprising: an aqueous acrylic emulsion polymer further comprising, as copolymerized units, from 0.25% to 99.75% by weight, based on dry polymer weight, of monoethylenically unsaturated nonionic (meth)acrylic monomer, from 0.40% to 99.75% by weight, based on dry polymer weight of one or more ethylenically unsaturated surfactant monomers and from 0.25% to 10% by weight, based on dry polymer weight, of monoethylenically unsaturated acid monomer, said polymer having a Tg of - 100 °C to 0 °C, wherein the pressure sensitive adhesive composition adheres to low energy and high energy substrates at temperatures less than 15° C.

5. The pressure sensitive adhesive according to claim 4, further comprising one or more tackifiers.

6. A pressure sensitive adhesive tape that adheres to low energy and high energy substrates at temperatures less than 15° C and having high burst resistance when applied to one or more difficult to adhere to substrates.

7. The pressure seneitive adhesive tape according to claim 6 wherein the tape has improved adhesion on low energy substrates and substrates that are difficult to adhere to.

8. The pressure sensitive adhesive according to claim 4, wherein maximum line speeds producing dry adhesive are at least 10-15% faster than conventional adhesives.

9. A carton sealing tape prepared from the adhesive composition of claim according to claim 4 or claim 5.

10. The pressure sensitive adhesive according to claim 4, wherein the adhesive is prepared from a blend of two or more polymers.
